# EUROPEAN PATENT APPLICATION

(11) **EP 4 425 333 A1**
(43) Date of publication of application: **04.09.2024**
(21) Application number: 24700082.1
(22) Date of filing: 08.01.2024
(51) Int. Cl.: G06F 9/50, G06F 9/48, G06F 11/30

(54) **ELECTRONIC DEVICE FOR ALLOCATING PROCESSES TO CPUS OF PROCESSOR**

(30) Priority: 17.01.2023 KR 20230006567; 27.02.2023 KR 20230025846
(71) Applicant: Samsung Electronics Co., Ltd., Suwon-si, Gyeonggi-do 16677 (KR)
(72) Inventor: KIM, Kiljae, Suwon-si, Gyeonggi-do 16677 (KR); BAE, Jinshik, Suwon-si, Gyeonggi-do 16677 (KR); CHO, Daehyun, Suwon-si, Gyeonggi-do 16677 (KR)
(74) Representative: Nederlandsch Octrooibureau
(86) International application number: PCT/KR2024/000323
(87) International publication number: WO 2024/154996

(57) **Abstract**

Provided is an electronic device including: a processor including a plurality of central processing units (CPUs); and a first memory which is volatile and is operatively connected to the processor. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The first memory may store instructions that, when executed, cause the processor to identify whether a first condition in which the number of tasks configured to be executed in the first set exceeds a designated threshold value is satisfied, and based on the first condition being satisfied, perform at least one of a first operation of transferring execution of a task having the longest standby time among tasks configured to be executed by CPUs, each of which has been configured as the universal CPU, to a CPU configured as the non-universal CPU in the second set, and a second operation of terminating execution of the oldest BG process after being generated among BG processes.

## Description

### Technical Field]

The disclosure relates to an electronic device for assigning processes to central processing units (CPUs) of a processor.

### [Background Art]

An operating system, for example, Android, built based on the Linux kernel, classifies processes into several groups. For example, processes residing in a memory (e.g., a RAM) and running or waiting may be divided into a background process and a foreground process (or a top-layer process or a non-background process). For example, a process corresponding to an application execution screen that is displayed on the top layer of a display of an electronic device and thus can interact with a user may be classified as a foreground process. A process that is hierarchically located under the foreground process and thus is not displayed on the display may be classified as a background process.

A processor may include a plurality of CPUs (or cores). The background process may be configured by the operating system to use a CPU with relatively low power consumption among the CPUs. For example, in a processor referred to as "advanced reduced instruction set computer (RISC) machine (ARM) big.LITTLE", cores are classified as a little core and a big core, the background process may use a little core. The foreground process may be configured by the operating system to use all cores including a little core.

The above-described information is provided as related art for the purpose of helping an understanding of the disclosure. No claim or determination is made as to whether any of the foregoing is applicable as prior art related to the disclosure.

### [Disclosure of Invention]

### [Technical Problem]

As technology in memory and processor-related fields advances, the number of background processes residing in a memory may increase. Accordingly, competition between background processes to be assigned a processor use time from a scheduler may intensify. A background process may remain in a queue of the scheduler for a long time in a state in which a lock (e.g., mutex lock or semaphore lock) is acquired to use a system resource of an electronic device. In this case, a case may occur in which a foreground process fails to acquire a lock and thus cannot use the system resource. Then, the execution of the foreground process is delayed, and as a result, a screen stuttering or shaking phenomenon (e.g., framedrop) may appear on a display.

According to an embodiment of the disclosure, an electronic device may reduce or prevent occurrence of the above-described delay phenomenon. For example, the delay phenomenon may be reduced or prevented even when multiple applications are being executed in the background. The technical problems to be achieved in the disclosure may not be limited to the above-mentioned technical problems, and other technical problems not mentioned may be clearly understood, through the following descriptions, by those skilled in the art to which the disclosure belongs.

### [Solution to Problem]

According to an embodiment, an electronic device includes: a processor including a plurality of central processing units (CPUs); and a first memory which is volatile and is operatively connected to the processor. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The first memory may store instructions that, when executed, cause the processor to identify whether a first condition in which the number of tasks configured to be executed in the first set exceeds a designated threshold value is satisfied. The instructions may cause the processor to, based on the first condition being satisfied, perform at least one of a first operation of transferring execution of a task having the longest standby time among tasks configured to be executed by CPUs, each of which has been configured as the universal CPU, to a CPU configured as the non-universal CPU in the second set, and a second operation of terminating execution of an oldest BG process after being generated among BG processes.

According to an embodiment, a method performed by a processor including a plurality of central processing units (CPUs) in an electronic device is provided. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The method may include an operation of periodically identifying whether a first condition in which the number of tasks configured to be executed in the first set exceeds a designated threshold value is satisfied. The method may include an operation of, based on the first condition being satisfied, transferring execution of a task having the longest standby time among tasks configured to be executed in CPUs, each of which has been configured as the universal CPU, to the non-universal CPU, and terminating execution of the oldest BG process after being generated among BG processes.

According to an embodiment, a method performed by a processor including a plurality of central processing units (CPUs) in an electronic device is provided. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The method may include an operation of, based on occurrence of a designated event, identifying whether a first condition in which the number of tasks configured to be executed in the first set exceeds a designated threshold value is satisfied. The method may include a first operation, a second operation, and a third operation performed based on the first condition being satisfied. The first operation may include an operation of transferring execution of a task having the longest standby time among tasks configured to be executed by CPUs, each of which has been configured as the universal CPU, to the non-universal CPU. The second operation may include an operation of terminating execution of the oldest BG process after being generated among BG processes. The third operation may include an operation of reconfiguring one CPU in the second set from the non-universal CPU to the universal CPU.

According to an embodiment, a method performed by a processor including a plurality of central processing units (CPUs) in an electronic device is provided. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The method may include an operation of, based on occurrence of a designated event and satisfaction of a first condition in which the number of tasks configured to be executed in the first set exceeds a designated threshold value, identifying whether a second condition in which an internal temperature identified using a sensing circuit of the electronic device is higher than a designated threshold value is satisfied. The method may include a first operation, a second operation, and a third operation performed based on the second condition not being satisfied. The first operation may include an operation of transferring execution of a task having the longest standby time among tasks configured to be executed by CPUs, each of which has been configured as the universal CPU, to the non-universal CPU. The second operation may include an operation of terminating execution of the oldest BG process after being generated among BG processes. The third operation may include an operation of reconfiguring one CPU in the second set from the non-universal CPU to the universal CPU. Based on the second condition being satisfied, the first operation may not be performed and the second operation and the third operation may be performed.

### [Advantageous Effects of invention]

According to an embodiment of the disclosure, an electronic device can minimize or prevent occurrence of the above-described delay phenomenon. In addition to this, various effects identified directly or indirectly through this document can be provided.

### [Brief Description of Drawings]

Fig. 1 is a block diagram illustrating an electronic device in a network environment according to various embodiments.
FIG. 2 is a block diagram of an electronic device configured to dynamically adjust the number of CPUs responsible for executing both a background process and a foreground process, according to an embodiment.
FIG. 3 is a flowchart illustrating operations of a processor in the electronic device of FIG. 2, according to an embodiment.
FIG. 4 is a flowchart illustrating operations of a processor in the electronic device of FIG. 2, according to an embodiment.
FIG. 5 is a flowchart illustrating operations of a processor in the electronic device of FIG. 2, according to an embodiment.
FIG. 6 is a flowchart illustrating operations of a processor in the electronic device of FIG. 2, according to an embodiment.

Hereinafter, embodiments of the disclosure will be described in detail with reference to the drawings so that those skilled in the art to which the disclosure belongs can easily implement the embodiments. However, the disclosure may be embodied in many different forms and is not limited to the embodiments described herein. In relation to the description of drawings, the same or similar reference numerals may be used for the same or similar components. In addition, in the drawings and related descriptions, descriptions of well-known functions and configurations may be omitted for clarity and conciseness.

### [Mode for the Invention]

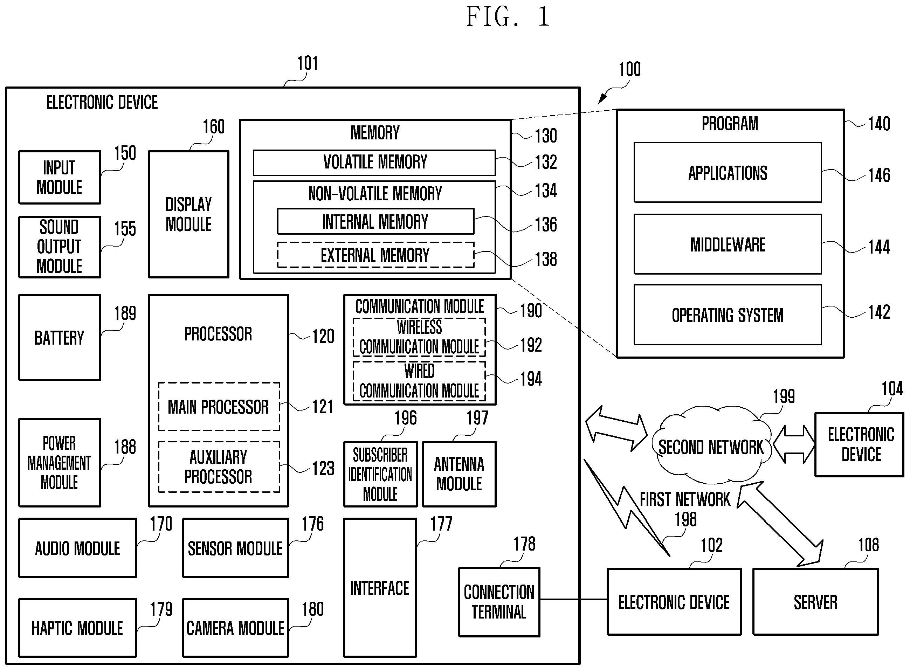

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

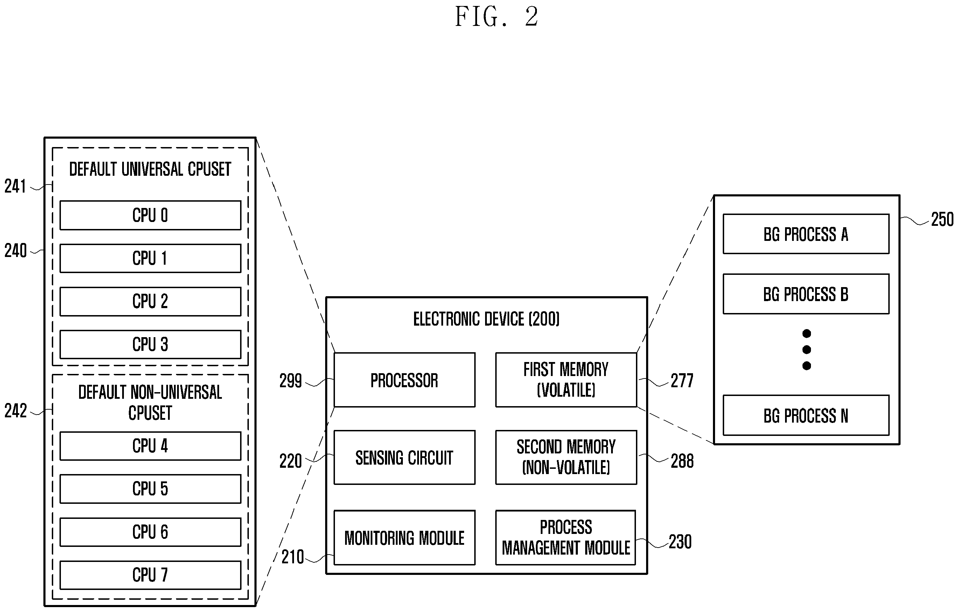

FIG. 2 is a block diagram of an electronic device 200 according to an embodiment. Referring to FIG. 2, the electronic device 200 (e.g., the electronic device 101 of FIG. 1) may include a monitoring module 210, a sensing circuit 220, a process management module 230, a first memory 277 which is volatile, a second memory 288 which is non-volatile, and a processor 299. The components of the electronic device 200 may be operatively or electrically connected to each other.

The processor 299 (e.g., the processor 120) may include a plurality of CPUs (in other words, cores) 240 configured to perform data processing and/or operations in the processor 299. For example, the processor 299 is an ARM-based processor and may include, for example, ARM big.LITTLE. The ARM big.LITTLE may include low-performance cores or little cores with relatively low power consumption and high-performance cores or big cores with high power consumption. The processor 299 may include two or more clusters (e.g., a little cluster, a middle cluster, and a big cluster) according to a performance and/or a power consumption rate. One cluster may include one or more CPUs. In an embodiment of the disclosure, a low-performance core is not necessarily required to be included in the processor 299, and all of the CPUs 240 may be high-performance cores.

According to an embodiment, a part of the CPUs 240 included in the processor 299 may be designated by an operating system (e.g., the operating system 142) to be included in a CPU set (hereinafter, a BG CPUSET) responsible for executing a background process. All of the CPUs 240 included in the processor 299 or a part of the CPUs 240 may be designated by the operating system to be included in a CPU set (hereinafter, an FG CPUSET) responsible for executing a foreground process. When a CPU is configured to belong to both the BG CPUSET and the FG CPUSET, the corresponding CPU may be responsible for executing a BG process and executing an FG process. Hereinafter, in this document, a CPUSET configured to be responsible for executing both the BG process and the FG process is referred to as a "universal CPUSET". A CPUSET that does not belong to the universal CPUSET is referred to as a "non-universal CPUSET". The term "universal" herein is merely used to cover a BG and an FG, and is not used to limit the technical idea of the disclosure. According to an embodiment, the non-universal CPUSET is responsible for executing the FG process. Therefore, the non-universal CPUSET may have a relatively small workload (the number of tasks) to be executed and may have a higher probability of being in an idle state, in which work is not performed, than that of the universal CPUSET. In other words, the universal CPUSET has a relatively large workload and has a relatively high probability of being in an active state. Accordingly, when the number of CPUs belonging to the universal CPUSET increases, power consumption is relatively high, and as a result, an internal temperature of the electronic device 200 may increase. When the number of CPUs belonging to the non-universal CPUSET increases, power consumption is small, but the above-described delay phenomenon may occur relatively. According to an embodiment of the disclosure, the electronic device 200 may suppress (or minimize) a delay phenomenon and suppress (or minimize) an increase in the internal temperature by dynamically adjusting the scale of the universal CPUSET according to a workload. According to an embodiment, the electronic device 200 may suppress (or minimize) a delay phenomenon and suppress (or minimize) an increase in the internal temperature by changing a part of tasks configured to be executed in the universal CPUSET according to a workload so as to be processed in the non-universal CPUSET. According to an embodiment, the electronic device 200 may suppress (or minimize) a delay phenomenon and suppress (or minimize) an increase in the internal temperature by terminating execution of a part of BG processes configured to be executed in the universal CPUSET according to a workload.

A program (e.g., the program 140 of FIG. 1) may be stored as instructions in the second memory 288 (e.g., the non-volatile memory 134) which is non-volatile, and may be loaded into the first memory 277 (e.g., the volatile memory 132) which is volatile, and thus be executed by the processor 299. According to an embodiment, the monitoring module 210 and the process management module 230 may be configured by instructions, and thus may be stored in the second memory 288 and loaded into the first memory 277 and executed by the processor 299.

In various embodiments of the disclosure, a task (in other words, a thread) is defined as one work unit of a process to be executed, and the processor 299 may sequentially or simultaneously execute one or multiple tasks, so as to execute one process corresponding thereto.

According to an embodiment, the monitoring module 210 may monitor periodically (e.g., every 100 ms) the number of tasks (hereinafter, the number of first tasks) assigned to a CPUSET (hereinafter, a default universal CPUSET) 241 designated by a universal default value, and the number of tasks (hereinafter, the number of second tasks) assigned to a CPUSET (hereinafter, a default non-universal CPUSET) 242 designated by a non-universal default value. The monitoring module 210 may monitor the number of first tasks and the number of second tasks, and inform the process management module 230 of the number of first tasks and the number of second tasks found as a result of the monitoring.

According to an embodiment, the monitoring module 210 may periodically monitor a standby time for which tasks assigned to the universal CPUSET wait for execution thereof (e.g., a time for which the tasks stay in a queue of a scheduler). The monitoring module 210 may inform the process management module 230 of identification information (e.g., a process identifier (PID)) of a task having the longest standby time and information on a standby time.

According to an embodiment, the monitoring module 210 may identify a time point when each of background processes is generated, and inform the process management module 230 of information on each generation time point.

According to an embodiment, the monitoring module 210 may monitor whether a designated event has occurred in the electronic device 200. When the designated event occurs, the monitoring module 210 may inform the process management module 230 that the designated event has occurred.

According to an embodiment, a user input may be designated as a monitoring target. The monitoring module 210 may recognize occurrence of a user input through an input device (e.g., a display).

According to an embodiment, an intent message exchanged between the components of the electronic device 200 may be designated as a monitoring target. For example, an intent message to be monitored may include, for example, a message indicating that the electronic device 200 is wirelessly connected to another electronic device through a short-distance wireless communication circuit (e.g., a Wi-Fi communication circuit), a message indicating that a user input to activate a display (e.g., to turn on a screen of the display) has occurred, a message indicating that the booting of the electronic device 200 has been completed, or a message indicating that a network which wirelessly connects the electronic devices to another electronic device has been changed. The monitoring module 210 may recognize that the intent message designated as the monitoring target is generated inside the electronic device 200 through the processor 299.

According to an embodiment, a lock contention situation lasting longer than a designated threshold time (e.g., 100 ms) may be designated as a monitoring target. A process may acquire a lock to use a system resource. When a standby time for lock acquisition exceeds the threshold time, the monitoring module 210 may inform the process management module 230 that the lock contention situation has occurred as a designated event.

According to an embodiment, a message may be exchanged between tasks. For example, in the Android system, the tasks may exchange a message through a looper. A situation in which a message is delayed without being delivered for a designated threshold time (e.g., 100 ms) or more may be designated as a monitoring target. The monitoring module 210 may inform the process management module 230 that a situation in which message delivery is delayed has occurred as a designated event.

According to an embodiment, the monitoring module 210 may be configured to identify a state of the display, not to perform the above-described monitoring operation when it is identified that the display is inactivated (e.g., the screen of the display is turned off), and to perform the above-described monitoring operation when it is identified that the display is activated.

According to an embodiment, the sensing circuit 220 may be disposed inside (e.g., near the battery (189)) the electronic device 200 to generate data used to identify an internal temperature of the electronic device 200, and provide the generated data to the processor 299. For example, the sensing circuit 220 may include a temperature sensor configured to sense an internal temperature, generate data corresponding to the sensed temperature, and provide the generated data to the processor 299. As another example, the processor 299 may acquire temperature data by requesting the data from the sensing circuit 220 periodically (polling manner) or in an interrupt manner. The internal resistance of an electric circuit configured inside the electronic device 200 may increase linearly as the internal temperature increases. For example, the electronic device 200 may include a power management integrated circuit (PMIC) configured to supply power to loads (e.g., a processor, a display, or a camera) configured inside the electronic device 200 and to adjust a level of a current or voltage of the power to be supplied. According to the internal temperature increase, the internal resistance of a lumped element (e.g., an inductor) in the power management integrated circuit increases, and such an increase in the internal resistance may cause an increase in a potential difference (voltage) between both ends of the lumped element. As another example, the sensing circuit 220 may be configured to measure a voltage between both ends of the electric circuit, generate data corresponding to the voltage, and provide the generated data to the processor 299. The processor 299 may determine an internal temperature of the electronic device 200, based on data representing a voltage received from the sensing circuit 220.

According to an embodiment, the process management module 230 may determine whether to perform an operation for reducing a workload (the number of tasks) required to be handled by at least one CPU in the universal CPUSET (hereinafter, a workload reduction operation), based on information received from the monitoring module 210. At least one of a first operation of extending the universal CPUSET (that is, increasing the number of CPUs), a second operation of transferring execution of a task having the longest standby time from the universal CPUSET to the non-universal CPUSET, and a third operation of forcibly terminating (e.g., deletion from the first memory 277 or termination of allocation to a CPU) execution of the oldest BG process after being generated among BG processes 250 stored in the first memory 277 may be performed as a workload reduction operation.

As an example, the process management module 230 may identify whether a first condition in which the number of first tasks of the default universal CPUSET 241 exceeds a designated threshold value is satisfied every designated period (e.g., 100 ms), and may perform the second operation and/or the third operation when the first condition is satisfied. For example, a case where when the number of first tasks of the default universal CPUSET 241 is greater than a value (e.g., the number of second tasks * 2) obtained by multiplying the number of second tasks of the default non-universal CPUSET 242 by a designated number may correspond to the first condition. At least one CPU in the default non-universal CPUSET 242 may be in a state of being re-designated as the universal CPUSET as the first operation is performed.

As another example, the process management module 230 may identify whether the first condition is satisfied, based on the occurrence of the above-described event regardless of the above-described period, and when the first condition is satisfied, perform the first operation and further perform at least one of the second operation and the third operation.

According to an embodiment, the process management module 230 may determine whether to perform the operation, further based on information received from the sensing circuit 220 as well as the information received from the monitoring module 210. As an example, the process management module 230 may determine an internal temperature of the electronic device 200, based on the data received from the sensing circuit 220, and identify whether a second condition in which the internal temperature exceeds a designated temperature value (e.g., 40 degrees) is satisfied. The process management module 230 may identify whether the first condition and the second condition are satisfied, based on the occurrence of the above-described event regardless of the above-described period, and may perform the second operation and/or the third operation when the first condition and the second condition are satisfied.

According to an embodiment, the process management module 230 may be configured to identify a state of the display, not to perform the above-described operation when it is identified that the display is inactivated, and to perform the above-described operation when it is identified that the display is activated.

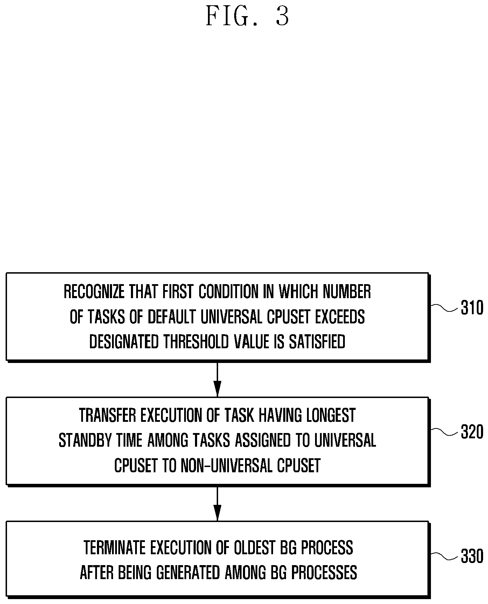

FIG. 3 is a flowchart illustrating operations of the processor 299 according to an embodiment. The modules 210 and 230 in FIG. 2 may cause the processor 299 to periodically perform operations of FIG. 3 while the display is activated.

In operation 310, the processor 299 may recognize that a first condition in which the number of first tasks of the default universal CPUSET 241 exceeds a designated threshold value is satisfied. For example, the processor 299 may identify the number of tasks (the number of first tasks) assigned to the default universal CPUSET 241 and the number of tasks (the number of second tasks) assigned to the default non-universal CPUSET 242. The processor 299 may recognize that the number of first tasks is greater than an integer multiple (e.g., twice) of the number of second tasks. When operation 310 is performed, at least one CPU in the default non-universal CPUSET 242 may be in a state of being re-designated as a universal CPUSET.

In operation 320, the processor 299 may transfer execution of a task having the longest standby time among tasks assigned to the universal CPUSET to a non-universal CPUSET, based on the first condition (e.g., "the number of first tasks > the number of second tasks * 2") being satisfied.

In operation 330, the processor 299 may terminate (e.g., deletion from the first memory 277) execution of the oldest BG process after being generated among the BG processes 250, based on the first condition being satisfied.

Operations 320 and 330 may be performed simultaneously or operation 330 may be performed first. Alternatively, only one of operations 320 and 330 may be performed.

When the first condition is satisfied again in the next period, at least one of operations 320 and 330 may be repeatedly performed.

According to an embodiment, when all of the CPUs 240 are configured as the universal CPUSET, that is, when there is no CPU configured as the non-universal CPUSET, operation 320 is omitted and the processor 299 may perform operation 320 after performing operation 310.

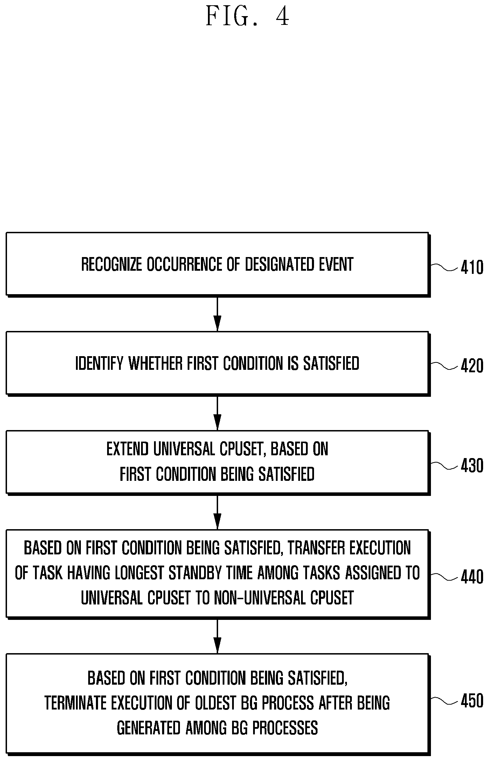

FIG. 4 is a flowchart illustrating operations of the processor 299 according to an embodiment. The modules 210 and 230 in FIG. 2 may cause the processor 299 to perform operations of FIG. 4 while the display is activated.

In operation 410, the processor 299 may recognize that the above-described designated event has occurred.

In operation 420, the processor 299 may identify whether the above-described first condition is satisfied, based on the occurrence of the event.

In operation 430, the processor 299 may extend a universal CPUSET, based on the first condition being satisfied. According to an embodiment, the processor 299 may designate at least one CPU in the default non-universal CPUSET 242 as the universal CPUSET. For example, based on the number of tasks of the default universal CPUSET 241 exceeding a designated first threshold value and not exceeding a designated second threshold value (> the first threshold value), the processor 299 may re-designate one CPU in the default non-universal CPUSET 242 as the universal CPUSET. As another example, based on the number of tasks of the default universal CPUSET 241 exceeding the second threshold value, the processor 299 may re-designate two or more CPUs in the default non-universal CPUSET 242 as the universal CPUSET. Accordingly, a CPU newly included in the universal CPUSET is responsible for executing a BG process, so that a workload per CPU in the universal CPUSET (e.g., at least one CPU in the default universal CPUSET 241 and the default non-universal CPUSET 242) may be reduced.

**[Table 1]**

| | CPU applied to universal CPUSET | | | | CPU applied to non-universal CPUSET | | | |
|---|---|---|---|---|---|---|---|---|
| CPU No. | CPU0 | CPU1 | CPU2 | CPU3 | CPU4 | CPU5 | CPU6 | CPU7 |
| Number of tasks | 10 | 20 | 10 | 10 | 0 | 1 | 1 | 1 |

Referring to Table 1, each of CPU0 to CPU3 is a default universal CPUSET 241, and is currently applied to a universal CPUSET. Each of CPU4 to CPU7 is a default non-universal CPUSET 242, and is currently applied to a non-universal CPUSET. The total number of tasks of the default universal CPUSET 241 is 50, and the total number of tasks of the default non-universal CPUSET 242 is 3. Since the first condition (50 > 3*2) is satisfied, the processor 299 may apply at least one of CPU4 to CPU7, for example, CPU4 to the universal CPUSET (see Table 2 below).

In operation 440, the processor 299 may transfer execution of a task having the longest standby time among tasks assigned to the universal CPUSET (e.g., CPU0 to CPU4) to the non-universal CPUSET, based on the first condition being satisfied.

In operation 450, the processor 299 may terminate (e.g., deletion from the first memory 277) execution of the oldest BG process after being generated among the BG processes 250, based on the first condition being satisfied.

Operations 440 and 450 may be performed simultaneously or operation 450 may be performed first. Alternatively, only one of operations 440 and 450 may be performed.

When the first condition is satisfied again even after the execution of operation 450 is completed and a designated time (e.g., 200 ms) has elapsed, operation 430 may be performed again, and at least one of operations 440 and 450 may be repeatedly performed. The universal CPUSET extension may continue until all CPUs are designated as the universal CPUSET one by one in stages whenever the first condition is satisfied.

**[Table 2]**

| | CPU applied to universal CPUSET | | | | | CPU applied to non-universal CPUSET | | |
|---|---|---|---|---|---|---|---|---|
| CPU No. | CPU0 | CPU1 | CPU2 | CPU3 | CPU4 | CPU5 | CPU6 | CPU7 |
| Number of tasks | 10 | 10 | 10 | 10 | 10 | 1 | 1 | 1 |

Referring to Table 2, each of CPU0 to CPU3 is a default universal CPUSET 241 and each of CPU4 to CPU7 is a default non-universal CPUSET 242. Each of CPU0 to CPU4 is currently applied to a universal CPUSET, and each of CPU5 to CPU7 is applied to a non-universal CPUSET. The total number of tasks of the default universal CPUSET 241 is 40, and the total number of tasks of the default non-universal CPUSET 242 is 13. Since the first condition (40 > 13*2) is satisfied, the processor 299 may apply one of CPU5 to CPU7, for example, CPU5 to the universal CPUSET (see Table 3 below).

According to an embodiment, when all of the CPUs 240 are configured as the universal CPUSET, that is, when there is no CPU configured as the non-universal CPUSET, operation 440 may be omitted. Accordingly, the processor 299 may perform operation 450 after performing operation 430.

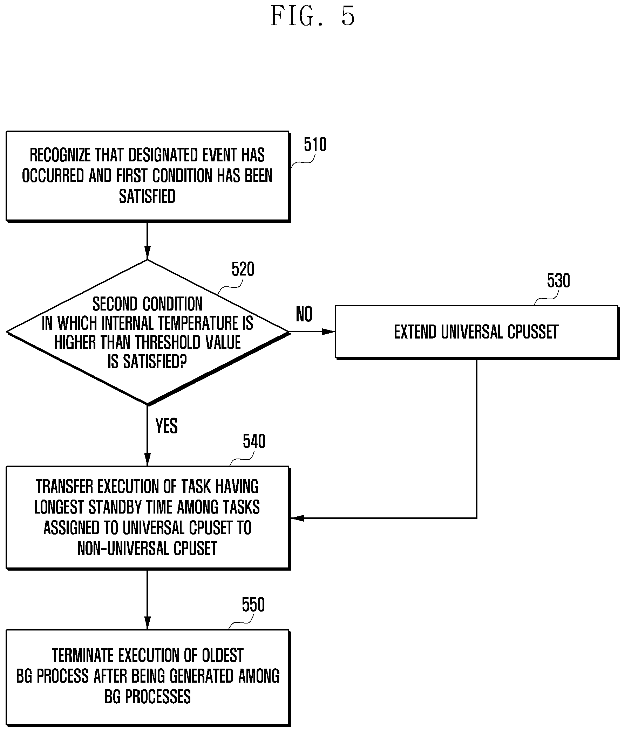

FIG. 5 is a flowchart illustrating operations of the processor 299 according to an embodiment. The modules 210 and 230 in FIG. 2 may cause the processor 299 to perform operations of FIG. 5 while the display is activated.

In operation 510, the processor 299 may recognize that the above-described designated event has occurred and the above-described first condition has been satisfied.

In operation 520, the processor 299 may identify whether a second condition in which an internal temperature of the electronic device 200 is higher than a threshold value is satisfied, based on the occurrence of the event and the satisfaction of the first condition.

As a result of the identification in operation 520, when the second condition is not satisfied, the processor 299 may perform operations 530, 540, and 550. As a result of the identification in operation 520, when the second condition is satisfied, the processor 299 may perform operations 540 and 550.

In operation 530, the processor 299 may extend a universal CPUSET. For example, the processor 299 may designate at least one CPU in the default non-universal CPUSET 242 as the universal CPUSET. Accordingly, a CPU included in the universal CPUSET is responsible for executing a BG process, so that a workload per CPU in the universal CPUSET (e.g., at least one CPU in the default universal CPUSET 241 and the default non-universal CPUSET 242) may be reduced.

In operation 540, the processor 299 may transfer execution of a task having the longest standby time among tasks assigned to the universal CPUSET to a non-universal CPUSET.

In operation 550, the processor 299 may terminate (e.g., deletion from the first memory 277) execution of the oldest BG process after being generated among the BG processes 250.

Operations 540 and 550 may be performed simultaneously or operation 550 may be performed first. Alternatively, only one of operations 540 and 550 may be performed.

When the first condition is satisfied again after the execution of operation 550 is completed and a designated time (e.g., 200 ms) has elapsed, operation 520 may be performed again, and as a result of the identification in operation 520, when the second condition is not satisfied, operations 530, 540, and 550 may be performed again, and as a result of the identification in operation 520, when the second condition is satisfied, operations 540 and 550 may be performed again. The universal CPUSET extension may continue until all CPUs are designated as the universal CPUSET one by one in stages whenever the first condition is satisfied.

According to an embodiment, when all of the CPUs 240 are configured as the universal CPUSET, that is, when there is no CPU configured as the non-universal CPUSET, operation 540 may be omitted. As a result of the identification in operation 520, when the second condition is not satisfied, the processor 299 may perform operations 530 and 550. When the second condition is satisfied, the processor 299 may perform only operation 550.

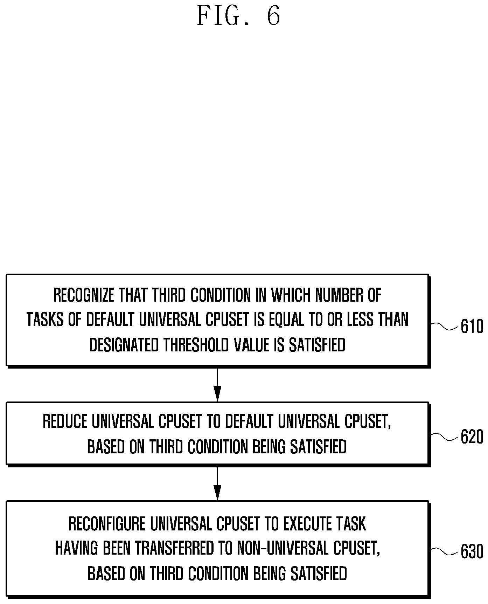

FIG. 6 is a flowchart illustrating operations of the processor 299 according to an embodiment. The modules 210 and 230 in FIG. 2 may cause the processor 299 to perform operations of FIG. 6. The operations of FIG. 6 may be performed after a designated time (e.g., 100 ms) has elapsed after the operations of FIG. 3, the operations of FIG. 4, or the operations of FIG. 5 are performed.

In operation 610, the processor 299 may recognize that a third condition (the number of first tasks ≤ a threshold value) in which the number of first tasks of a universal CPUSET is equal to or less than a designated threshold value (e.g., the same value as a threshold value (e.g., the number of second tasks * 2) in operation 310) is satisfied.

In operation 620, the processor 299 may reduce the universal CPUSET to the default universal CPUSET 241, based on the third condition being satisfied. For example, as the universal CPUSET is extended before operation 610 is performed, at least one CPU in the default non-universal CPUSET 242 may be in a state of being designated as the universal CPUSET. The processor 299 may reduce the universal CPUSET to the default universal CPUSET 241 by designating all of CPU4 to CPU7 as a non-universal CPUSET, based on the third condition being satisfied. When all of CPU4 to CPU7 are already the non-universal CPUSET, operation 620 may be omitted.

**[Table 3]**

| | CPU applied to universal CPUSET | | | | | | CPU applied to non-universal CPUSET | |
|---|---|---|---|---|---|---|---|---|
| CPU No. | CPU0 | CPU1 | CPU2 | CPU3 | CPU4 | CPU5 | CPU6 | CPU7 |
| Number of tasks | 5 | 5 | 10 | 10 | 10 | 10 | 1 | 1 |

Referring to Table 3, each of CPU0 to CPU3 is a default universal CPUSET 241 and each of CPU4 to CPU7 is a default non-universal CPUSET 242. Each of CPU0 to CPU5 is currently applied to a universal CPUSET, and each of CPU6 and CPU7 is applied to a non-universal CPUSET. The total number of tasks of the default universal CPUSET 241 is 30, and the total number of tasks of the default non-universal CPUSET 242 is 22. Since the third condition (30 ≤ 22*2) is satisfied, the processor 299 may reconfigure CPU4 and CUP5 as non-universal CPUs (in other words, restore the same to initial values).

In operation 630, the processor 299 may reconfigure the universal CPUSET to execute the task having been transferred to the non-universal CPUSET, based on the third condition being satisfied. When the execution of the task transferred to the non-universal CPUSET is terminated or there is no transferred task, operation 630 may be omitted.

According to an embodiment, an electronic device includes: a processor (e.g., the processor 299) including a plurality of central processing units (CPUs); and a first memory (e.g., the first memory 277) which is volatile and is operatively connected to the processor. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The first memory may store instructions that, when executed, cause the processor to identify whether a first condition in which the number of tasks configured to be executed in the first set exceeds a designated threshold value is satisfied. The instructions may cause the processor to, based on the first condition being satisfied, perform at least one of a first operation of transferring execution of a task having the longest standby time among tasks configured to be executed by CPUs, each of which has been configured as the universal CPU, to a CPU configured as the non-universal CPU in the second set, and a second operation of terminating execution of an oldest BG process after being generated among BG processes.

The instructions may cause the processor to recognize that the first condition is satisfied, when the number of tasks configured to be executed in the first set is greater than twice the number of tasks configured to be executed in the second set.

The instructions may cause the processor to identify whether the first condition is satisfied, based on occurrence of a designated event. The instructions may cause the processor to perform a third operation of reconfiguring one CPU in the second set from the non-universal CPU to the universal CPU, based on the first condition being satisfied.

The instructions may cause the processor to monitor, as the event, a user input by using the electronic device.

The instructions may cause the processor to monitor, as the event, an intent message exchanged between components of the electronic device.

The instructions may cause the processor to monitor, as the event, a situation in which a time for which a process has waited for a lock to use a system resource of the electronic device exceeds a designated threshold time.

The instructions may cause the processor to monitor, as the event, a situation in which a message is delayed without being delivered from a task to another task for a designated threshold time or more.

The electronic device may further include a sensing circuit (e.g., the sensing circuit 220) configured to generate data used to identify an internal temperature of the electronic device. The instructions may cause the processor to identify whether a second condition in which the internal temperature identified using the sensing circuit satisfies is higher than a designated threshold value is satisfied, based on the occurrence of the designated event and the first condition being satisfied. The instructions may cause the processor to perform the third operation of reconfiguring one CPU in the second set from the non-universal CPU to the universal CPU, based on the second condition not being satisfied, and to further perform at least one of the first operation and the second operation. The instructions may cause the processor to perform at least one of the first operation and the second operation, based on the second condition being satisfied.

The instructions may cause the processor to, after a designated time has elapsed after the first operation is performed, identify whether a third condition in which the number of tasks configured to be executed in the first set is equal to or less than a designated threshold value is satisfied. The instructions may cause the processor to allow the universal CPU to execute the task transferred to the non-universal CPU, based on the third condition being satisfied.

The instructions may cause the processor to, after a designated time has elapsed after the third operation is performed, identify whether the third condition in which the number of tasks configured to be executed in the first set is equal to or less than the designated threshold value is satisfied. The instructions may cause the processor to reconfigure the CPU configured as the universal CPU in the second set as the non-universal CPU, based on the third condition being satisfied.

According to an embodiment, a method performed by a processor (e.g., the processor 299) including a plurality of central processing units (CPUs) in an electronic device is provided. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The method may include an operation of periodically identifying whether a first condition in which the number of tasks configured to be executed in the first set exceeds a designated threshold value is satisfied. The method may include an operation of, based on the first condition being satisfied, transferring execution of a task having the longest standby time among tasks configured to be executed by CPUs, each of which has been configured as the universal CPU, to the non-universal CPU, and terminating execution of the oldest BG process after being generated among BG processes.

The identifying operation may include an operation of recognizing that the first condition is satisfied, when the number of tasks configured to be executed in the first set is greater than twice the number of tasks configured to be executed in the second set.

According to an embodiment, a method performed by a processor (e.g., the processor 299) including a plurality of central processing units (CPUs) in an electronic device is provided. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The method may include an operation of, based on occurrence of a designated event, identifying whether a first condition in which the number of tasks configured to be executed in the first set exceeds a designated threshold value is satisfied. The method may include a first operation, a second operation, and a third operation performed based on the first condition being satisfied. The first operation may include an operation of transferring execution of a task having the longest standby time among tasks configured to be executed by CPUs, each of which has been configured as the universal CPU, to the non-universal CPU. The second operation may include an operation of terminating execution of the oldest BG process after being generated among BG processes. The third operation may include an operation of reconfiguring one CPU in the second set from the non-universal CPU to the universal CPU.

The method may include an operation of, after a designated time has elapsed after the first operation, the second operation, and the third operation are performed, identifying whether a third condition in which the number of tasks configured to be executed in the first set is equal to or less than a designated threshold value is satisfied. The method may further include an operation of, based on the third condition being satisfied, allowing the universal CPU to execute the task transferred to the non-universal CPU, and reconfiguring the CPU configured as the universal CPU in the second set as the non-universal CPU.

According to an embodiment, a method performed by a processor (e.g., the processor 299) including a plurality of central processing units (CPUs) in an electronic device is provided. A part of the plurality of CPUs is included in a first set, and another part of the plurality of CPUs is included in a second set. A CPU included in the first set may be configured as a universal CPU responsible for executing both a background (BG) process and a foreground (FG) process. A CPU included in the second set may be configured as one of the universal CPU and a non-universal CPU responsible for executing only the FG process. The method may include an operation of, based on occurrence of a designated event and satisfaction of a first condition in which the number of tasks configured to be executed in the first set exceeds a designated threshold value, identifying whether a second condition in which an internal temperature identified using a sensing circuit of the electronic device is higher than a designated threshold value is satisfied. The method may include a first operation, a second operation, and a third operation performed based on the second condition not being satisfied. The first operation may include an operation of transferring execution of a task having the longest standby time among tasks configured to be executed by CPUs, each of which has been configured as the universal CPU, to the non-universal CPU. The second operation may include an operation of terminating execution of the oldest BG process after being generated among BG processes. The third operation may include an operation of reconfiguring one CPU in the second set from the non-universal CPU to the universal CPU. Based on the second condition being satisfied, the first operation may not be performed and the second operation and the third operation may be performed.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a processor comprising a plurality of central processing units (CPUs); and
a first memory which is volatile and is operatively connected to the processor,
wherein a part of the plurality of CPUs is included in a first set,
wherein another part of the plurality of CPUs is included in a second set,
wherein a CPU included in the first set is configured as a universal CPU responsible for executing both a background (BG) process and a foreground (FG) process,
wherein a CPU included in the second set is configured as one of the universal CPU and a non-universal CPU responsible for executing only the FG process, and
wherein the first memory stores instructions that, when executed, cause the processor to:
identify whether a first condition in which the number of tasks configured to be executed in the first set exceeds a designated threshold value is satisfied; and
based on the first condition being satisfied, perform at least one of a first operation of transferring execution of a task having a longest standby time among tasks configured to be executed by CPUs, each of which has been configured as the universal CPU, to a CPU configured as the non-universal CPU in the second set, and a second operation of terminating execution of an oldest BG process after being generated among BG processes.

2. The electronic device of claim 1, wherein the instructions cause the processor to recognize that the first condition is satisfied, in case that the number of tasks configured to be executed in the first set is greater than twice the number of tasks configured to be executed in the second set.

3. The electronic device of claim 1, wherein the instructions cause the processor to:
identify whether the first condition is satisfied, based on occurrence of a designated event; and
perform a third operation of reconfiguring one CPU in the second set from the non-universal CPU to the universal CPU, based on the first condition being satisfied.

4. The electronic device of claim 3, wherein the instructions cause the processor to monitor, as the designated event, a user input by using the electronic device.

5. The electronic device of claim 3, wherein the instructions cause the processor to monitor, as the designated event, an intent message exchanged between components of the electronic device.

6. The electronic device of claim 3, wherein the instructions cause the processor to monitor, as the designated event, a situation in which a time for which a process has waited for a lock to use a system resource of the electronic device exceeds a designated threshold time.

7. The electronic device of claim 3, wherein the instructions cause the processor to monitor, as the designated event, a situation in which a message is delayed without being delivered from a task to another task for a designated threshold time or more.

8. The electronic device of one of claims 1 to 7, further comprising a sensing circuit configured to generate data used to identify an internal temperature of the electronic device,
wherein the instructions cause the processor to:
based on the occurrence of the designated event and the first condition being satisfied, identify whether a second condition in which the internal temperature identified using the sensing circuit satisfies is higher than a designated threshold value is satisfied;
perform the third operation of reconfiguring one CPU in the second set from the non-universal CPU to the universal CPU, based on the second condition not being satisfied, and further perform at least one of the first operation and the second operation; and
perform at least one of the first operation and the second operation, based on the second condition being satisfied.

9. The electronic device of claim 8, wherein the instructions cause the processor to:
after a designated time has elapsed after the first operation is performed, identify whether a third condition in which the number of tasks configured to be executed in the first set is equal to or less than a designated threshold value is satisfied; and
allow the universal CPU to execute the task transferred to the non-universal CPU, based on the third condition being satisfied.

10. The electronic device of claim 8, wherein the instructions cause the processor to:
after a designated time has elapsed after the third operation is performed, identify whether a third condition in which the number of tasks configured to be executed in the first set is equal to or less than a designated threshold value is satisfied; and
reconfigure the CPU configured as the universal CPU in the second set as the non-universal CPU, based on the third condition being satisfied.

11. A method performed by a processor comprising a plurality of central processing units (CPUs) in an electronic device,
wherein a part of the plurality of CPUs is included in a first set,
wherein another part of the plurality of CPUs is included in a second set,
wherein a CPU included in the first set is configured as a universal CPU responsible for executing both a background (BG) process and a foreground (FG) process,
wherein a CPU included in the second set is configured as one of the universal CPU and a non-universal CPU responsible for executing only the FG process, and
wherein the method comprises:
identifying whether a first condition in which the number of tasks configured to be executed in the first set exceeds a designated threshold value is satisfied; and
based on the first condition being satisfied, transferring execution of a task having a longest standby time among tasks configured to be executed by CPUs, each of which has been configured as the universal CPU, to the non-universal CPU, and terminating execution of an oldest BG process after being generated among BG processes.

12. The method of claim 11, wherein the identifying comprises recognizing that the first condition is satisfied, in case that the number of tasks configured to be executed in the first set is greater than twice the number of tasks configured to be executed in the second set.

13. A method performed by a processor comprising a plurality of central processing units (CPUs) in an electronic device,
wherein a part of the plurality of CPUs is included in a first set,
wherein another part of the plurality of CPUs is included in a second set,
wherein a CPU included in the first set is configured as a universal CPU responsible for executing both a background (BG) process and a foreground (FG) process,
wherein a CPU included in the second set is configured as one of the universal CPU and a non-universal CPU responsible for executing only the FG process,
wherein the method comprises:
based on occurrence of a designated event, identifying whether a first condition in which the number of tasks configured to be executed in the first set exceeds a designated threshold value is satisfied; and
performing a first operation, a second operation, and a third operation, based on the first condition being satisfied,
wherein the first operation comprises transferring execution of a task having a longest standby time among tasks configured to be executed by CPUs, each of which has been configured as the universal CPU, to the non-universal CPU,
wherein the second operation comprises terminating execution of an oldest BG process after being generated among BG processes, and
wherein the third operation comprises reconfiguring one CPU in the second set from the non-universal CPU to the universal CPU.

14. The method of claim 13, further comprising:
after a designated time has elapsed after the first operation, the second operation, and the third operation are performed, identifying whether a third condition in which the number of tasks configured to be executed in the first set is equal to or less than a designated threshold value is satisfied; and
based on the third condition being satisfied, allowing the universal CPU to execute the task transferred to the non-universal CPU, and reconfiguring the CPU configured as the universal CPU in the second set as the non-universal CPU.

15. A method performed by a processor comprising a plurality of central processing units (CPUs) in an electronic device,
wherein a part of the plurality of CPUs is included in a first set,
wherein another part of the plurality of CPUs is included in a second set,
wherein a CPU included in the first set may be configured as a universal CPU responsible for executing both a background (BG) process and a foreground (FG) process,
wherein a CPU included in the second set is configured as one of the universal CPU and a non-universal CPU responsible for executing only the FG process,
wherein the method comprises:
based on occurrence of a designated event and satisfaction of a first condition in which the number of tasks configured to be executed in the first set exceeds a designated threshold value, identifying whether a second condition in which an internal temperature identified using a sensing circuit of the electronic device is higher than a designated threshold value is satisfied; and
performing a first operation, a second operation, and a third operation, based on the second condition not being satisfied,
wherein the first operation comprises transferring execution of a task having a longest standby time among tasks configured to be executed by CPUs, each of which has been configured as the universal CPU, to the non-universal CPU,
wherein the second operation comprises terminating execution of an oldest BG process after being generated among BG processes,
wherein the third operation comprises reconfiguring one CPU in the second set from the non-universal CPU to the universal CPU, and
wherein, based on the second condition being satisfied, the first operation is not be performed and the second operation and the third operation are performed.
